(19) Europäisches Patentamt

European Patent Office

Office européen des brevets

(11) **EP 0 732 140 A1**

(12) **EUROPEAN PATENT APPLICATION**

(43) Date of publication:
18.09.1996 Bulletin 1996/38

(51) Int. Cl.⁶: **B01D 53/86**, B01D 53/94, B01J 29/46

(21) Application number: 96103828.8

(22) Date of filing: 12.03.1996

(84) Designated Contracting States:
AT BE DE DK ES FI FR GB GR IT NL PT SE

(30) Priority: 17.03.1995 JP 86259/95
18.04.1995 JP 117874/95
31.07.1995 JP 194657/95

(71) Applicants:
• ENIRICERCHE S.p.A.
I-20097 S. Donato Milanese (Milano) (IT)
• OSAKA GAS CO., LTD.
Osaka-shi, Osaka-fu 541 (JP)

(72) Inventors:
• Bellussi, Giuseppe
Piacenza (IT)

• Sabatino, Luigina Maria Flora
San Donato Milanese (MI) (IT)
• Tabata, Takeshi
Toyonaka-shi, Osaka 561 (JP)
• Kokitsu, Mikako
Toyonaka, Osaka 554 (JP)
• Okada, Osamu
Osaka 589 (JP)
• Hirofumi, Ohtsuka
Ashiya, Hyogo 659 (JP)

(74) Representative: Fusina, Gerolamo et al
Ing. Barzanò & Zanardo Milano S.p.A,
Via Borgonuovo, 10
20121 Milano (IT)

(54) **Nitrogen oxide-reducing catalyst and process for reducing nitrogen oxides in exhaust gas**

(57) The present invention relates to a catalyst for reducing nitrogen oxides (NOx) in exhaust gas, comprising crystalline metallosilicate ion-exchanged with Co, and channels of particular structure formed in the crystalline metallosilicate, and to a NOx reduction process using said catalyst; said catalyst having a high selectivity for NOx reduction and a high NOx reduction activity even at low temperature.

## Description

The present invention relates to a catalyst for reducing nitrogen oxides in exhaust gas, more particularly to a catalyst for reducing nitrogen oxides by using hydrocarbon in exhaust gas containing an excessive amount of oxygen, and to a process for reducing nitrogen oxides in exhaust gas, more particularly in exhaust gases containing hydrocarbon and an excessive amount of oxygen.

As a process for removing nitrogen oxides (hereinafter referred to as NOx) from oxygen-rich exhaust gas, ammonia denitration method has been put to practical use. However, this process cannot be applied to small combustors for the following two reasons: firstly, this process requires a storage of an ammonia source, and secondly, slip of excess ammonia causes a secondary environmental pollution problem. It has been found recently, as in disclosed in Japanese Patent Application laid open Sho 63-100919, that NOx can be selectively reduced by hydrocarbon on a zeolite catalyst ion-exchanged with a metal like Cu.

However, if hydrocarbons with four or smaller number of carbons are used as the reducing agent, this catalyst has a low selectivity (molar ratio of the hydrocarbons used in NOx reduction to the consumed hydrocarbons) in the presence of water vapor which always exists in general exhaust gases, resulting in insufficient NOx conversion.

Armor, et al. have reported ("Applied Catalysis B: Environmental," Vol. 1, p. L31) that NOx can selectively be reduced by methane on Co ion-exchanged ZSM-5 (MFI zeolite). Co ion-exchanged mordenite is disclosed, as a selective NOx reducing catalyst, in U.S. Patent No. 5149512. However, these publications only give examples of catalysts to describe the catalytic activity under the condition without water vapor. It has been known that these catalysts are also deactivated to the level insufficient for practical use in the presence of water vapor. These problems of the conventional catalysts urged search for an improved catalyst which is active even in the presence of water vapor.

To solve the above-mentioned problems, an object of the present invention is to provide a NOx reduction catalyst with high durability which is capable of removing NOx from exhaust gas that contains relatively lower hydrocarbon alone as exhausted from natural gas combustione, and of providing sufficiently high activity at low temperatures even in exhaust gas containing water vapor, sulfur oxides (hereinafter referred to as SOx), etc., and to provide a NOx reduction process using this catalyst, as well as to provide a NOx reducing catalyst on which methane can be effectively utilized as a reductant, and a NOx reduction process using this catalyst.

To solve the above mentioned problems, the inventors intensively studied catalysts made of crystalline metallosilicalite loaded, by ion exchange with Co. As a result, the inventors found that Co ions dispersed in the channels in the crystalline metallosilicate serve as active sites effective in the reaction for selective catalytic reduction of NOx using hydrocarbons consisting of about two to five carbons as the reducing agent, and that active sites deep in the channels also contribute to the reaction, unlike the case with a zeolite catalyst loaded with Cu or precious metals. Specifically, in the case of the catalyst loaded with Cu or precious metals, since the metal has high oxidation activity, the reaction for reduction is terminated on the methals or metal ions existing on the zeolite particle surfaces. If metal ions are present deep in the channels, they cannot contribute to the reaction. By contrast, the crystalline metallosilicate catalyst loaded with Co is expected to provide high selectivity for NOx reduction, due to low oxidation activity of Co. However, since the reaction for NOx reduction on this catalyst is slow, unreacted reactant enters deep in the channels, thus causing reaction even on Co ions existing deep in the channels. The catalytic activity may be improved by increasing the concentration of these active sites on the particle surfaces of the support. However, it is found that, if Co ions are too close to one another, an oxide cluster that can activate oxygen, such as $Co_3O_4$, will be formed, so that the hydrocarbon oxidation activity is enhanced, resulting in lower selectivity of the catalyst and smaller number of active sites.

At low temperatures, the Co-ZSM-5 or the like catalyst does not provide high activity for selective catalytic reduction of NOx by lower hydrocarbons in an atmosphere containing water vapor and SOx. The inventors found that this phenomenon is attributed to insufficient diffusion of reactants and reaction products. Specifically, the water vapor and Sox contained in the atmosphere prevent diffusion of reactants and reaction products, so that active sites deep in the channels are not used effectively. The inventors also found that, to effectively use the active sites present deep in the channels, the channels must be not only large in diameter, but also be straight, and that the channels of such structure must be oriented in at least two different dimensional directions and must communicate with each other, forming bypasses.

The present invention has been made based on these findings. The catalyst according to the present invention contains crystalline metallosilicate ion-echanged with Co to provide active sites, the crystalline metallosilicate having straight channels of oxygen 8-ring or larger section, directed in at least two different dimensional directions, said straight channels communicating with each other via oxygen 8-ring or larger micropores, the straight channels in at least one direction having oxygen 10-ring or larger section. The NOx reduction process according to the present invention comprises the use of the above-mentioned catalyst.

The crystalline metallosilicate constituting the catalyst of this invention has traight channels of oxygen 8-ring or larger section, which are oriented in at least two different dimensional directions. The straight channels communicate with each other via oxygen 8-ring or larger micropores. The channels in at least one direction have oxygen 10-ring or larger section. To prevent water vapor and SOx from hampering the diffusion of reactants and reaction products, the straight channels are required to have bypasses. The metallosilicate, like MOR type, in which the straight channel are formed in only one direction, is not applicable, because, if the channels are clogged with SOx etc., reactants can never reach active sites existing in the deeper part of the clogged channels.

The diffusion rate in the channels differs widely depending on whether the channels are straight or bent. It is considered that diffusion effective for reduction of NOx in exhaust gas can occur almost only in straight channels. In the case of MFI type metallosilicate in which straight channels are formed in only one direction, if the channels are blocked, it takes so long time for reactants to make a detour to reach active sites. Accordingly, it is necessary that straight channels be formed in at least two different directions, communicating with each other.

If the section of each straight channel is smaller than oxygen 8-ring, reactants, such as NOx and hydrocarbons, cannot be diffused into the channels. The larger is the section of each straight channel the better, as long as the crystalline metallosilicate has sufficient thermostability. The crystalline metallosilicate having the above-mentioned channel structure includes the types, of AFR,AFS, AFY, BEA, BOG, BPH, DAC, FER, GME, HEU, LTL, MEL. MFS or OFF, preferably, BEA, BOG or MEL type in which channels are large in diameters. More preferable type is BEA or MEL because they can be synthetized easily as a product of high purity. The most preferable form is BEA which has straight channels of oxygen 12-ring section in two different dimensional directions, the channels communicating with each other via oxygen 12-ring micropores.

In addition to the above-mentioned channel structure, the crystalline metallosilicate used for the present invention is required to have ion exchange capacity. Crystalline aluminosilicate which is zeolite in a narrow sense, silica aluminophosphate (SAPO), gallosilicate, etc. are examples of crystalline metallosilicate with ion exchange capacity.Crystalline metallosilicate where silicon is partly replaced with titanium tec. may be used. Aluminosilicate is the most prefereable in view of the thermostability of crystal and controllability of ion exchange capacity, although the crystalline metallosilicate of the present invention is not limited to these insofar as it has stable ion exchange capacity.

Ion exchange capacity is important because it directly determines the number of active sites. For aluminosilicate, the $SiO_2/Al_2O_3$ ratio (molar ratio) is a measure for the ion exchange capacity. When this ratio is higher than 100, the aluminosilicate has insufficient ion exchange capacity so is in short of active sites. When this ratio is lower than 10, on the other hand, the aluminosilicate increases in hydrophilicity, causing that water vapor hampers reaction for NOx reduction. In addition, excessive number of cations fils the channels, narrowing the space, thus impairing the diffusibility. Therefore, the $SiO_2/Al_2O_3$ ratio of aluminosilicate should be preferably between 10 and 100. For any applicable crystalline metallosilicate other than aluminosilicate, the total number of framework atoms (main element of oxide) per the total numbers of exchangeable cations calculated as divalent cationshould also be of a value corresponding to the above-mentioned ratio. The $SiO_2/Al_2O_3$ ratio for stable crystalline metallosilicate is generally fixed for each type of crystalline metallosilicate support. The preferable $SiO_2/Al_2O_3$ ratio of BEA aluminosilicate is between 10 and 50, the one of MEL being preferably between 20 and 100.

The production process of the crystalline metallosilicate used for the present invention is not limited as far as the crystalline metallosilicate has ion exchange capacity and straight channels of oxygen 8-ring or larger section, directed in at least two dirrerent dimensionale directions, said straight channels communicating with each other via oxygen 8-ring or larger micropores, the straight channels in at least one direction having oxygen 10-ring or larger section. The crystalline metallosilicate of the above-mentioned structure can be produced, for example, by ordinary hydrotermal synthesis using a template. MEL aluminosilicate can be synthesized by the method disclosed in the U.S. Patent No. 3709979, and BEA aluminosilicate by the method disclosed in the U.S. Patent No. 3308069.

Additionally, the average diameter or the primary particles of the crystallime metallosilicate is preferably between 0.01 um and 0.2 um, more preferably, between 0.03 um and 0.1 um, since the advantage of the crystalline metallosilicate for high diffusion is reduced when the primary particle size is too large. Even if the average diameter of the primay particle is smaller than this lower limit, there is no problem in the durability of the catalyst as far as the catalyst is used under preferable conditions of the present invention. However, the macropore generated between primary particles become too small when the diameter of the primary particles is too small, therefore, the average diameter of the primary particles is preferably at least 0.01 μm. The crystalline metallosilicate having such a particle size can be prepared by the methods disclosed in US Patent No. 3709979 and US Patent No. 3308069. During the reaction process, higher reactant concentrations, lower pH, higher temperature, more frequent agitation, and shorter reaction time than ordinary synthesis conditions lead to decrease the size of the primary particles of the crystalline.

Another catalyst of the present invention includes BEA zeolite in which part of Si is substituted by Ti, and/or part of Al by B. The BEA zeolite substituted by Ti and/or B can be manufatured from mixture containing Ti source and/or B source, by the ordinary hydrothermal synthesis method using a template. B-substituted BEA zeolite can be manufactured, for example, by the process disclosed in U.S. Patent No. 5110570, and Ti-substituted one by the process disclosed in Spanish Patent No. 2037596.

Specifically, B-substituted BEA zeolite can be obtained by adding B source, such as boric acid, borate or trialkilborate, to the mixture of Si source, such as silica sol or sodium silicate, and Al source, such as aluminum nitrate, aluminum sulfate or sodium aluminate; mixing them with template such as N-tetralkylammonium salt, alkali such as sodium hydrate or ammonia, and water; allowing the mixture to react for 2 to 7 days in an autoclave at 90 to 180°C;

filtrating and washing the resultant solid with water; drying it at 80 to 200°C; and calcining it for 1 hour to 2 days in air at 400 to 700°C.

Ti-substituted BEA zeolite can be manufactured by the same method as for B-substituted BEA zeolite, except that Ti source, such as halide including titanium chloride, or alcooxide including titanium isopropoxide and titanium tetraethoxide, is added in place of B source to the mixture of Al and Si sources. The duration of reaction in the autoclave may be increased as necessary.

Whether or not the resultant zeolite substituted by Ti and/or B has BEA crystalline structure can easily be determined by X-ray diffraction analysis.

It is preferable that Ti- substituted BEA zeolite should have an $SiO_2/TiO_2$ ratio (molar ratio) of 20 to 200. With an $SiO_2/TiO_2$ ratio lower than 20, the crystallinity of zeolite is deteriorated, and the $SiO_2/Al_2O_3$ ratio cannot be raised. With an $SiO_2/TiO_2$ ratio higher than 200, on the other hand, the effect of Ti substitution is lost. For the same reason, the $SiO_2/B_2O_3$ ratio (molar ratio) of B-substituted BEA zeolite should preferably be between 20 and 500.

The catalyst of the present invention comprises the above-mentioned crystalline metallosilicate loaded with at least Co by ion exchange. The ion exchange may be carried out by an ordinary method. For example, proton-, sodium- or ammonium-form metallosilicate is suspended in an aqueous solution in which the water-soluble salt of Co is dissolved by a quantity equivalent to, or somewhat larger than, the ion exchange capacity, keeping temperature between room temperature and about 80°C, to allow ion exchange to take place for onr hour to about three days. The resultant product is then washed with water, dried and calcined at temperatures between 400°C and 750°C. Since the crystalline metallosilicate has a channel structure suitable for diffusion, ion exchange takes place relatively easily. Therefore, it is more preferable to carry out the ion exchange in aqueous solution of a lower concentration and at a lower temperature, because such conditions allow Co ions to be loaded completely on ion-exchange sites without aggregation.

Preferable metal loading amount is from 40% to 120% in terms of ion exchange rate. The ion exchange rate is the percentage of the sum of products of the molar number of loaded metal multiplied by the charge of the metal ions, to the ion exchange capacity obtained by summing up the products of the molar number of echangeable cations multiplied by the valence of the cations. If the ion exchange rate is lower than the above-mentioned preferable range, the activity of the catalyst will be insufficient. Ion exchange rate higher than this range is not desirable either: metal ions not only fill the straight channels, narrowing the passage for reactants, but also can be aggregated. For boron-substituted BEA zeolite, desirable range of Co loading is 0.2 to 0.6 in terms of Co/Al ratio.

The catalyst of the present invention may contain alkaline earth metal as promoter, and binder, etc. The catalyst of the present invention may be formed into a pellet or honeycomb form, or may be wash-coated on a refractory honeycomb support. Since the catalyst of the present invention uses crystalline metallosilicate support on which metal ions having low oxidation activity can be loaded with high dispersion, high selectivity of NOx reduction can be obtained, In addition, this metallosilicate has a channel structure suitable for diffusion, therefore, even in an actual exhaust gas atmosphere containing water vapor and SOx, reactants can reach the active sites of metal ions deep in the channels, resulting high NOx reduction activity. Thus, the catalyst of the present invention has high activity at low temperatures and maintains high selectivity even at high temperatures, which leads to high NOx conversion in a wide range of temperatures. Furthermore, since many bypasses allowing high diffusion are formed in the crystalline metallosilicate in case of possible partial clogging of the channels, the catalyst of the present invention has high durability. Besides, using boron-substituted zeolite, NOx is selectively reduced by methane in the presence of water vapor.

The NOx reduction process of the present invention is to selectively reduce NOx in exhaust gas containing hydrocarbons and an excessive amount of oxygen, using hydrocarbons consisting of two or more carbons on a catalyst. The process according to the present invention uses the catalyst obtained by the method described above, specifically the catalyst which contains crystalline metallosilicate ion-exchanged with Co, said crystalline metallosilicate having straight channels of oxygen 8-ring or larger section, oriented in at least two different dimensional directions and communicating with each other via oxygen 8-ring or larger micropores, the straight channels in at least one direction having oxygen 10-ring or larger section.

Another NOx reduction process of the present invention uses the catalyst comprising BEA zeolite in which part of Si is substituted by Ti, and/or part of Al by B, and which is ion-exchanged with Co to have a Co/Al ratio between 0.2 and 0.6.

The NOx reduction process of this invention comprises allowing the above-mentioned catalyst to contact exhaust gas containing NOx, hydrocarbons and an excessive amount of oxygen. The condition for this reduction process is not limited if the process uses the above-mentioned catalyst. Specifically, the catalyst used in the NOx reduction process of the present invention is required to contain crystalline metallosilicate ion-exchanged with Co, the crystalline metallosilicate having straight channels of oxygen 8-ring or larger section, oriented in at least two different dimensional directions, said straight channels communicating with each other via oxygen 8-ring or larger micropores, the straight channels in at least one direction being oxygen 10-ring or larger in section. According to the present invention the process is operated at a temperature between 300°C and 600°C, preferably between 350°C and 500°C, and with a gaseous hourly space velocity (GHSV) between 2,000 and 100,000 preferably between 5,000 and 30,000. Operating temperature lower than 300°C would result in low catalytic activity, and that higher than 600°C would cause early deteriortion of the catalyst. The GHSV lower than 2,000 would result in high pressure loss in the catalyst bed, and that higher than 100,000 would result in poor NOx conversion.

The hydrocarbons consisting of two or more carbons used in the present invention refer to a wide variety of hydrocarbons, including olefins such as ethylene, and paraffins such as propane, Preferably, they should be aliphatic hydrocarbons containing two to five carbons. On the other hand, methane can be effectively utilized according to another process of the present invention in which a catalyst obtained from boron substituted BEA zeolite is used.

The NOx reduction process of this invention is not limited in the NOx concentration of exhaust gas. The hydrocarbon concentration in terms of methane (THC) required for reduction of NOx is, normally, from 1/2 to 10 times the NOx concentration. That is, the hydrocarbon concentration required for reduction of 10 to 5,000 ppm NOx is 5 ppm to 5%. If hydrocarbon content in exhaust gas is not sufficient, an appropriate amount of hydrocarbon may be added to the exhaust gas to attain desired NOx conversion. Since the NOx reduction process of the present invention uses the catalyst which allows easy diffusion in the channels, high NOx conversion can be obtained even at a low NOx concentration which is unfavorable to diffusion. Another NOx reduction process of the present invention uses a catalyst based on BEA zeolite which enables high reactant diffusion. In addition, according to process of the present invention, hydrocarbon activation and NOx reduction activity at low temperature are enhanced, due to the effect of substitution by Ti and/or B. With B-substituted catalyst in particular, it is possible to reduce NOx effectively using methane even in the presence of water vapor.

If the oxygen concentration in exhaust gas is excessively low, oxidation, of NO, which is the first stage of reaction, does not occur. The oxygen concentration should preferably be 0.5% or higher, more preferably 3% or higher. Although there is no upper limit of oxygen concentration, oxygen concentration higher than that of air is not preferable since unexpected explosive combustion can be caused. However, since on the catalyst used in the NOx reduction process of the present invention metal ions having low activity for hydrocarbon oxidation is highly dispersed for a long time, the catalytic selectivity hardly drops in exhaust gas with high oxygen concentration.

Exhaust gas may also contain other components, such as $H_2O$, $CO_2$, CO, $H_2$ and SOx. The NOx reduction process of the present invention is particularly suitable for use in exhaust gas containing water vapor, SOx and other substances considered to hamper the reaction for selective catalytic reduction using hydrocarbon. The process of this invention is also suitable for removing NOx from exhaust gas produced by combustion of natural gas in which hydrocarbons having four or fewer carbons account for 90% or more of the entire hydrocarbons calculated in terms of methane. The catalyst using B-substitued BEA zeolite is particularly suitable for reducing NOx in exhaust gases, such as those generated by combustion of natural gas, in which methane amounts to 50% or more of the entire hydrocarbons.

Since the NOx reduction process of the present invention uses hydrocarbons to remove NOx, hydrocarbons in the exhaust gas are also removed, but CO is not removed. An oxidation catalyst may be installed downstream of the catalyst of the present invention, if necessary, to oxidize remaining CO, hydrocarbons etc.

The present invention will be described furher in detail with reference to examples. These examples are not intended to limit the scope of the present invention.

Example 1

According to the method disclosed in the US Patent No. 3308069, a solid was crystallized to have a $SiO_2/Al_2O_3$ ratio of 40 by mixing sodium aluminate, sodium hydrate, silica sol, tetraethylammonium hydrate, and water with agitation followed by heating the mixture in an autoclave at 160 °C for 20 hours. The obtained solid was separated, washed with water, dried at 150 °C, and calcined at 550 °C for 5 hours. The obtained BEA aluminosilicate (hereinafter referred to as BEA zeolite) had a $SiO_2/Al_2O_3$ ratio of 44.08. The average diameter of the primary particle of the zeolite crystal was about 0.05 μm, and the primary particles agglomerated to form secondary particles of about 0.6 μm in diameter.

Twelve grams of the obtained BEA zeolite (proton form) was suspended in 65 ml aqueous solution of 0.2 M cobalt acetate, to carry out ion exchange for 5 hours at 60 °C. The resultant ion-exchanged BEA zeolite was sepatared, washed with water, and then underwent ion exchange again in the same way. The resultant ion-exchanged Cozeolite was washed with water, dried, and calcined for 5 hours in air at 550 °C, to obtain Co-BEA (1) catalyst. The Co content of this catalyst was 2.22 wt%, the Co/Al ratio was 0.55, and the ion exchange rate was 110%.

Example 2

BEA zeolite with $SiO_2/Al_2O_3$ ratio of 18.87 was prepared by the method disclosed in the U.S. Patent N. 3308069. The average diameter of the primary particle of the zeolite crystal was about 0.1 μm, and the primary particles agglomerated to form secondary particles of about 0.3 to 0.6 μm. Using the obtained BEA zeolite (proton form), Co-BEA (2) catalyst was obtained by the same method as in Example 1, except that 13.03 g of the BEA zeolite was suspended in 180 ml aqueous solution dissolving 2 g cobalt acetate $[Co(CH_3COO)_2 \cdot 4H_2O]$. The Co content of Co-BEA (2) catalyst was 4.01 wt%, the Co/Al ratio was 0.54, and the ion exchange rate was 108%.

Example 3

MEL aluminosilicate (hereinafter referred to as MEL zeolite) with $SiO_2/Al_2O_3$ ratio of 36.3 was prepared by the method disclosed in the U.S. Patent No. 3709979. The average diameter of the primary particle of the zeolite crystal was about 0.05 μm, and the primary particles agglomerated to form secondary particles of about 0.2 to 1.3 um in diameter. Using the obtained MEL zeolite (Na-form), Co-MEL catalyst was obtained by the same method as in Example 1, except that 15 g of the MEL zeolite was suspended in 105 ml aqueous solution of cobalt acetate. The Co content of this catalyst was 2.78 wt%, the Co/Al ratio was 0.56, and the ion exchange rate was 112%.

Example 4

BEA zeolite with $SiO_2/Al_2O_3$ ratio of 22.3 was prepared by the method disclosed in the U.S.Patent No. 3308069. The average diameter of the primary particle of the zeolite crystal was about 0.05 μm, and the primary particles agglomerated to form secondary particles of about 0.2 to 0.6 μm in diameter. Using the obtained BEA zeolite (Na form), Co-BEA (3) catalyst was prepared by the same method as in Comparative Example 1, except that 250.14 g of the BEA zeolite was suspended in 2 liters of aqueous solution of 0.2 M cobalt acetate. The Co content of the resultant catalyst was 3.0 wt%, and the Co/Al ratio was 0.40.

Comparative Example 1

Using FAU aluminosilicalite (hereinafter referred to as FAU zeolite) with $SiO_2/Al_2O_3$ ratio of 4.8, manufactured by UC Company, Co-Y catalyst was obtained by the same method as in Example 1, except that 30 g of the FAU zeolite was suspended in 500 ml aqueous solution of cobalt acetate. The Co content of this catalyst was 8.2 wt%, the Co/Al ratio was 0.32, and the ion exchange rate was 64%.

Comparative Example 2

Using MOR aluminosilicalite (hereinafter referred to as MOR zeolite) with $SiO_2/Al_2O_3$ ratio of 11.2 manufactured by Norton Company, Co-MOR (1) catalyst was obtained by the same methodas in Example 1, except that 5 g of the MOR zeolite was suspended in 500 ml aqueous solution of 0.03 M cobalt acetate, and that the ion exchange operation was repeated four cycles. The Co content of this catalyst was 5.2 wt%, the Co/Al ratio was 0.37, and the ion exchange rate was 74%.

Comparative Example 3

MFI aluminosilicalite (hereinafter referred to as MFI zeolite) with $SiO_2/Al_2O_3$ ratio of 35 was prepared by the method disclosed in the U.K. Patent No. 1402981. Using this MFI zeolite (Na-form), Co-MFI (1) catalyst was obtained by the same method as in Example 1, except that 20 g of the MFI zeolite was suspended in 150 ml aqueous solution of cobalt acetate. The Co content of this catalyst was 1.42 wt%, the Co/Al ratio was 0.29, and the ion exchange rate was 58%.

Example 5

Each of the catalysts obtained in Examples 1 through 3 and Comparative Examples 1 through 3 was formed into a pellet, which was crushed and sieved to obtain 1 to 2 mm particles. The particles were then calcined for 9 hours at 500°C to prepare samples. Four milliliters of this sample was packed in a stainless steel reaction tube (14 mm in inside diameter). While test gas of the composition specified in Table 1 was allowed to flow at the rate of 1 liter/min (GHSV = 15,000) through this reaction tube, the gas composition at the outlet of the reactiontube was measured by a chemiluminescence NOx meter and by a gas chromatograph.

TABLE 1

| | |
|---|---|
| NO = 500 ppm | $H_2$ = 660 ppm |
| $C_3H_8$ = 1000 ppm | $CO_2$ = 6 % |
| $O_2$ = 10 % | $H_2O$ = 9 % |
| CO = 1000 ppm | He = balance |

Table 2 gives the catalytic activity (NOx and propane conversion) of each catalyst at 400°C and 500°C. The NOx and propane conversions were calculated from the NOx and propane concentrations at the inlet and outlet of the reaction tube, using the following equations:

$$\text{NOx Conv. (\%)} = \frac{\text{Outlet N}_2 \text{ Conc. (ppm) x 2}}{\text{Inlet NO Conc. (ppm)}} \times 100$$

$$\text{C}_3\text{H}_8 \text{ Conv. (\%)} = \frac{\text{Inlet C}_3\text{H}_8 - \text{Outlet C}_3\text{H}_8 \text{ Conc. (ppm)}}{\text{Inlet C}_3\text{H}_8 \text{ Conc. (ppm)}} \times 100$$

Table 2

| Catalyst | NOx Conversion 400°C | (C$_3$H$_8$ Conversion) (%) 500°C |
|---|---|---|
| Co-BEA (1) | 83.4 (99.8) | 73.4 (100) |
| Co-BEA (2) | 80.4 (100) | 64.7 (100) |
| Co-MEL | 77.7 (90.5) | 65.9 (100) |
| Co-Y | 0 (1.9) | 3.9 (51.2) |
| Co-MOR (1) | 54.2 (91.1) | 35.4 (100) |
| Co-MFI (1) | 56.8 (94.1) | 46.6 (100) |

As is clear from Table 2, the Co-BEA (1), Co-BEA (2) and Co-MEL catalysts according to the present invention have high NOx conversion at 400°C, indicating that they have high activity at low temperature. Their NOx conversions drop only little at 500°C, which verifies that these catalysts maintain high selectivity for NOx reduction even at high temperatures.

Example 6

Ti-substituted BEA zeolite (hereinafter referred to as "Ti/BEA zeolite") was prepared by the process disclosed in Spanish Patent No.2037596, using tetraethyl orthotitanate as Ti source. The SiO$_2$/TiO$_2$ and SiO$_2$/Al$_2$O$_3$ ratios of the starting mixture were 100 and 50, respectively. Specifically, after the mixture for reaction was stirred at 130°C for 20 days, it was filtrated, washed, dried at 150°C, and calcined at 550°C in air. X-ray diffraction analysis revealed that the resultant zeolite is BEA type structure with high crystallinity.

Twenty grams of Ti/BEA zeolite (Na form) thus obtained was suspended in 300 ml aqueous solution dissolving 2 g cobalt acetate (Co(CH$_3$COO)$_2$.4H$_2$O), to perform ion exchange for 5 hours at 50°C. After filtration and washing with water, the same ion exchange operation was repeated again. Ion-exchanged zeolite thus obtained was then washed with water, dried, and calcined for 5 hours in air at 550°C, to obtain Co-Ti/BEA catalyst. The SiO$_2$/Al$_2$O$_3$ and SiO$_2$/TiO$_2$ ratios of this catalyst were 43.6 and 98.27, respectively, the Co content was 1.76 wt%, and the Co/Al ratio was 0.50.

Example 7

B-substituted BEA zeolite (hereinafter referred to as "B/BEA zeolite") was prepared by the process disclosed in U.S. Patent No. 5110570, using boric acid as B source. The SiO$_2$/B$_2$O$_3$ and SiO$_2$/Al$_2$O$_3$ ratios of the starting mixture were 25 and 30, respectively. After the mixture for reaction was stirred at 170°C for 4 days, it was filtrated, washed, dried at 150°C, and calcined in air at 550°C. X-ray diffraction analysis revealed that the resultant zeolite has BEA type structure. The SiO$_2$/B$_2$O$_3$ ratio was 437.6.

From 20 g of this B/BEA zeolite (proton form), Co-B/BEA (1) catalyst was obtained by the same method as in Example 1, except that the zeolite was suspended in 130 ml aqueous solution of 0.2 M cobalt acetate and that ion exchange operation was repeated three times. The SiO$_2$/Al$_2$O$_3$ ratio of the resultant catalyst was 28.96, the Co content was 2.73 wt%, and the Co/Al ratio was 0.49.

Example 8

B-substituted BEA zeolite was prepared by the process disclosed in U.S. Patent No. 5110570, using boric acid as B source.

The $SiO_2/B_2O_3$ and $SiO_2/Al_2O_3$ ratios of the starting mixture were 50 and 28, respectively. After the mixture for reaction was stirred at 175°C for 4 days, it was filtrated, washed, dried at 120°C, and calcined in air at 550°C. X-ray diffraction analysis revealed that the resultant zeolite has BEA type structure. The $SiO_2/B_2O_3$ ratio was 136.7.

The obtained B/BEA zeolite (Na form)(24.4 grams) was suspended in 200 ml aqueous solution dissolving 4.36 g cobalt acetate, to perform ion exchange for 5 hours at 60°C. After filtration and washing, the same ion exchange operation was repeated again.

Ion-exchanged zeolite thus obtained was then washed with water, dried, and calcined for 5 hours in air at 550°C, to obtain Co-B/BEA (2) catalyst. The $SiO_2/Al_2O_3$ ratio of this catalyst was 27.6, the Co content was 2.64 wt%, and the Co/Al ratio was 0.50.

Comparative Example 4

BEA borosilicate was prepared by the process disclosed in U.S. Patent No. 5110570, using boric acid as B source. The $SiO_2/B_2O_3$ ratio of the starting mixture was 5. After the mixture for reaction was stirred at 150°C for 2 day, it was filtrated, washed, dried at 120°C, and calcined in air at 550°C. X-ray diffraction analysis revealed that the resultant borosilicate has BEA type structure. The $SiO_2/B_2O_3$ ratio was 23.9.

From 12 g of this BEA borosilicate (Na form), Co-BSI catalyst was obtained by the same method of ion exchange and subsequent operation as in Example 8, except that the borosilicate was suspended in 100 ml aqueous solution of 0.2 M cobalt acetate: The $SiO_2/B_2O_3$ ratio of the resultant catalyst was 40, the Co content was 2.31 wt%, and the Co/B ratio was 0.52.

Example 9

For each of the catalysts obtained in Examples 6 and 7, and Comparative Example 4 and Examples 1 and 4, the NOx selective reduction activity was evaluated by the same method as in Example 5, except that test gas of the composition given in Table 3 was used. The results are shown in Table 4.

TABLE 3

| NO = 150 ppm | $H_2$ = 660 ppm |
|---|---|
| $C_3H_8$ = 500 ppm | $CO_2$ = 6 % |
| $O_2$ = 10 % | $H_2O$ = 9 % |
| CO = 1000 ppm | He = balance |

**Table 4**

| Catalyst | $\dfrac{SiO_2}{Al_2O_3}$ | $\dfrac{Co}{Al}$ | NOx Conversion ($C_3H_8$ Conversion) (%) | | | |
|---|---|---|---|---|---|---|
| | | | 350°C | 400°C | 450°C | 500°C |
| Co-Ti/BEA | 43.60 | 0.50 | 57.9 (78.6) | 65.6 (97.2) | 78.5 (99.6) | 69.5 (100) |
| Co-BEA (1) | 44.08 | 0.55 | 28.2 (28.0) | 60.7 (60.8) | 72.0 (79.4) | 73.4 (97.2) |
| Co-BSI | (40)* | (0.52)* | | 5.0 (22.8) | | 2.0 (39.5) |
| Co-B/BEA (1) | 28.96 | 0.49 | 74.3 (98.4) | 81.0 (99.4) | 75.6 (100) | 58.4 (100) |
| Co-BEA (3) | 22.3 | 0.40 | 34.8 (60.1) | 69.5 (78.7) | 70.8 (84.6) | 74.5 (97.0) |

\* The values are over $B_2O_3$ or B. Al is not contained.

As is clear from Table 4, the Co-Ti/BEA and Co-B/BEA (1) catalysts according to another part of the present invention provide higher NOx conversion than the corresponding Co-BEA (1) and Co-BEA (3) catalysts in a low temperature range from 350 to 450°C. That is, even at low temperature and with low NOx concentration, the former two catalysts provide high NOx reduction activity due to the substitution by Ti and/or B in the framework. Meanwhile, the Co-borosilicate catalyst without Al cannot support Co ions as dispersed satisfactorily, and therefore provides only little catalytic activity, despite the BEA crystal structure, because boron was removed during ion exchange and borosilicate does not have a stable ion exchange capacity. This finding indicates that Al is vital to a NOx reducing catalyst for boron-substituted crystalline silicate.

Comparative Example 5

Co-MOR (2) catalyst was obtained by almost the same process as in Example 1, except that 15 g of the same MOR zeolite as in Comparative Example 2 was suspended in 110 ml aqueous solution of 0.2 M cobalt acetate. The Co content of the resultant catalyst was 4.41 wt%, and the Co/Al ratio was 0.36.

Comparative Example 6

MFI (ZSM-5) zeolite with $SiO_2/Al_2O_3$ ratio of 50 was prepared by the process disclosed in British Patent No. 1402981. Ten grams of this MFI zeolite (Na form) was suspended in 1 liter aqueous solution of 0.0073 M cobalt nitrate, to perform ion exchange at 40°C for 24 hours, then at 80°C. The resultant zeolite was filtrated, washed with water, dried, and calcined at 500°C for 5 hours, to obtain Co-MFI (2) catalyst.
The Co content of this catalyst was 1.9 wt%, and the Co/Al ratio was 0.53.

Example 10

For each of the catalysts obtained in Example 8 and Comparative Examples 5 and 6, the NOx selective reduction activity was evaluated by the same method as in example 5, except that test gas of the composition given in Table 5 was used.

TABLE 5

| | |
|---|---|
| NO = 500 ppm | $H_2$ = 660 ppm |
| $CH_4$ = 2000 ppm | $CO_2$ = 6 % |
| $O_2$ = 10 % | $H_2O$ = 9 % |
| CO = 1000 ppm | He = balance |

Table 6 gives the evaluation result of catalytic activity.
The $CH_4$ conversion was calculated by the same method as for $C_3H_8$ conversion. A reference result of boro-free catalyst (Co-BEA(Ref.), Example 13 in Japanese Patent Application Laid-open Hei No.07-513125) under the same conditions is also shown in Table 6.

TABLE 6

| Catalyst | NOx Conversion ($CH_4$ Conversion) (%) | | | |
|---|---|---|---|---|
| | $H_2O$ = O % | | $H_2O$ = 9 % | |
| | 400 °C | 500 °C | 400 °C | 500 °C |
| Co-B/BEA(2) | 44.4(24.8) | 34.1(93.9) | 3.5(1.0) | 30.9(48.9) |
| Co-MOR (2) | 56.1(27.8) | 51.7(91.4) | 0 (0.9) | 4.4 (12.3) |
| Co-MFI (2) | 25.2(13.3) | 31.0(75.0) | 0 (2.4) | 0 (12.7) |
| Co-BEA(Ref.) | | | 0 (3.0) | 7.5 (26.9) |

As is clear from Table 6, Co-MOR (2) catalysts and Co-MFI (2) catalysts disclosed in U.S. Patent No. 5149512 provide high NOx conversion in the absence of water vapor, but are substantially deactivated in the presence of water vapor. By contrast, Co-B/BEA (2) catalyst of the present invention is highly active even in the presence of water vapor, obviously more active than Co-Bea (Ref.) catalyst which is not substituted with B.

Example 11

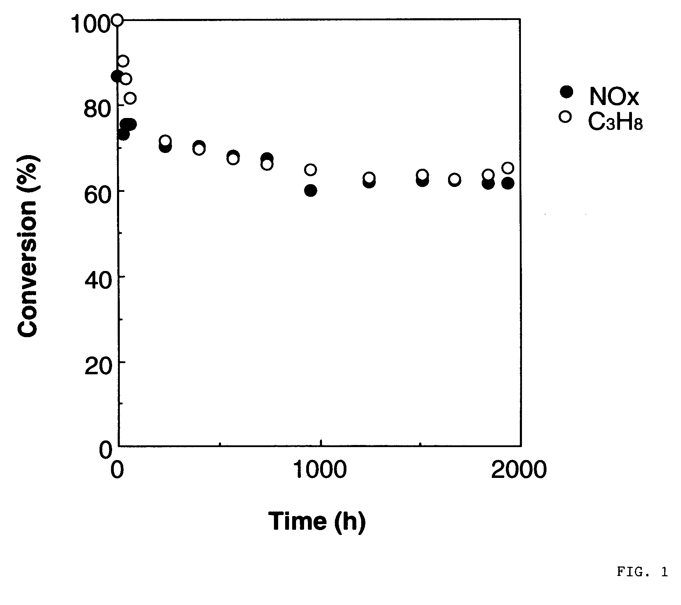

BEA zeolite (Na form) with $SiO_2/Al_2O_3$ ratio of 19.7 was prepared by the method disclosed in the U.S. Patent No. 3308069. Using this BEA zeolite, Co-BEA (4) catalyst was obtained by the same method as in Example 1, except that 15 g of the BEA zeolite was suspended in 60 ml aqueous solution of cobalt acetate. The Co content of this catalyst was 1.82 wt%, the Co/Al ratio was 0.21, and the ion exchange rate was 42%.
The activity evaluation of this catalyst, conducted by the same method as in Example 5, showed that the NOx conversion at 400°C was 66%. The durability of this catalyst was also evaluated by the same method as in Example 5, except that the test was carried out by continuous flowing of the gas of the composition specified in Table 7 which simulates the exhaust of a lean burn natural gas engine. Fig. 1 shows the result of evaluation. The NOx and $C_3H_8$ conversions were calculated by the same method as in Example 5.

TABLE 7

| NO = 150 ppm | $H_2$ = 250 ppm |
|---|---|
| $C_3H_8$ = 500 ppm | $CO_2$ = 6 % |
| $O_2$ = 10 % | $H_2O$ = 9 % |
| $CH_4$ = 1000 ppm | $SO_2$ = 0.3 ppm |
| CO = 500 ppm | He = balance |

As is obvious from Fig. 1, the Co-BEA (4) catalyst constantly maintained 60% or higher NOx conversion rate for 2,000 hours, verifying that the catalyst of the present invention not only provides high initial activity but high durability even in an atmosphere containing water vapor and SOx.

Example 12

The durability of Co-MEL catalyst of Example 3 was evaluated by the same method as in Example 11. The catalyst was stable in activity and had about 50% NOx conversion rate even after the lapse of 500 hours.

Comparative Example 7

The durability of Co-MOR (1) catalyst of Comparative Example 2 was evaluated by the same method as in Example 11. In 24 hours, the catalytic activity deteriorated substantially, with the NOx conversion dropping below 20%. Therefore, the operating temperature was raised to 450°C. Although the conversion rate recovered temporarily, it soon resumed declining trend, dropping below 10% in 140 hours. Thus, the Co-MOR (1) catalyst is not durable enough for practical use.

Comparative Example 8

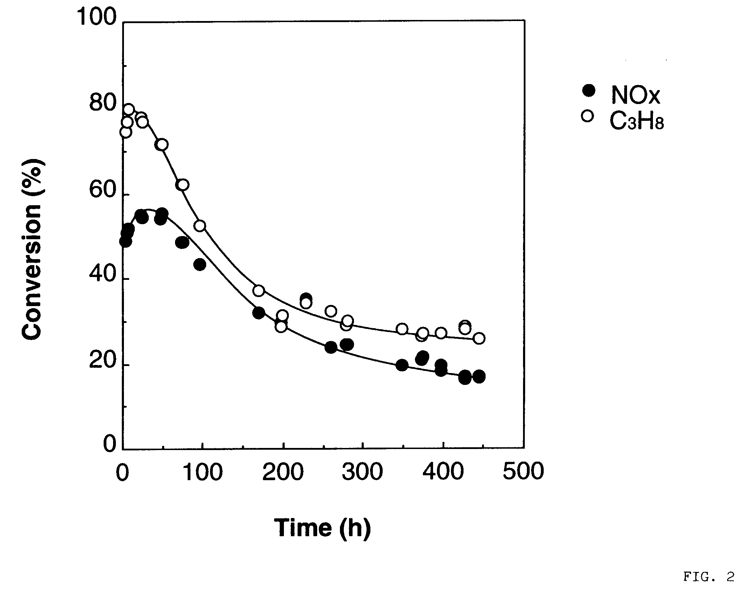

Co-MFI (3) catalyst ($SiO_2/Al_2O_3$ = 50) was obtained by almost the same method as in Comparative Example 3. The Co content was 1.9 wt%, the Co/Al ratio was 0.53, and the ion exchange rate was 106%.
Activity evaluation of the Co-MFI (3), conducted by the same method as in Example 5, showed that the catalyst had 68% NOx conversion rate at 400°C. The durability was also evaluated by the same method as in Example 11. Fig. 2 shows the result of the evaluation. The catalytic activity deteriorated substantially with time, and the NOx conversion dropped below 20% in 500 hours. These evaluation results indicate that the Co-MFI (3) catalyst is not sufficiently durable in an actual operating atmosphere although its initial activity is moderately high.

Comparative Example 9

Five grams of BEA zeolite (proton-form) with $SiO_2/Al_2O_3$ ratio of 22.3 was suspended in 1,000 ml aqueous solution of 0.0035 M copper acetate, to carry out ion exchange for 18 hours at room temperature. The resultant ion-exchanged Cu-BEA zeolite was washed with water, dried, and calcined for 9 hours at 500°C, to obtain Cu-BEA catalyst. The Cu content of this catalyst was 4.0 wt%, the Cu/Al ratio was 0.53, and the ion exchange rate was 107%.

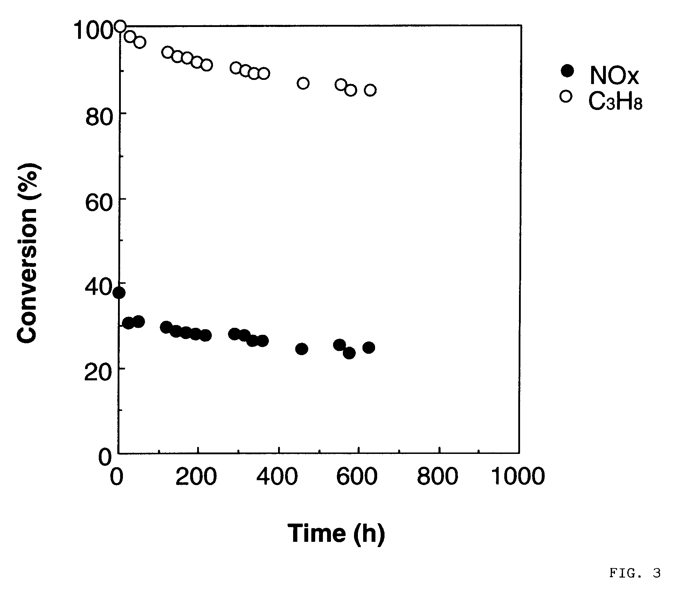

The durability of this catalyst was evaluated by the same method as in Example 11, except that the operating temperature was 500°C. Fig. 3 shows the result of evaluation.

As shown, this catalyst provides poor selectivity for NOx reduction, and the activity continues declining even after the lapse of 600 hours. This activity deterioration is presumably caused by aggregation of Cu ions as in the case with the Cu-ZSM-5 (Cu-MFI) catalyst, also reported by the inventors ("Study on Surface Science and Catalysis", Vol. 88, p.409). Thus, if ion-exchanged with Cu, the BEA catalyst cannot have higher NOx conversion or higher suppression effect on Cu ions aggregation than does the MFI catalyst.

Example 13

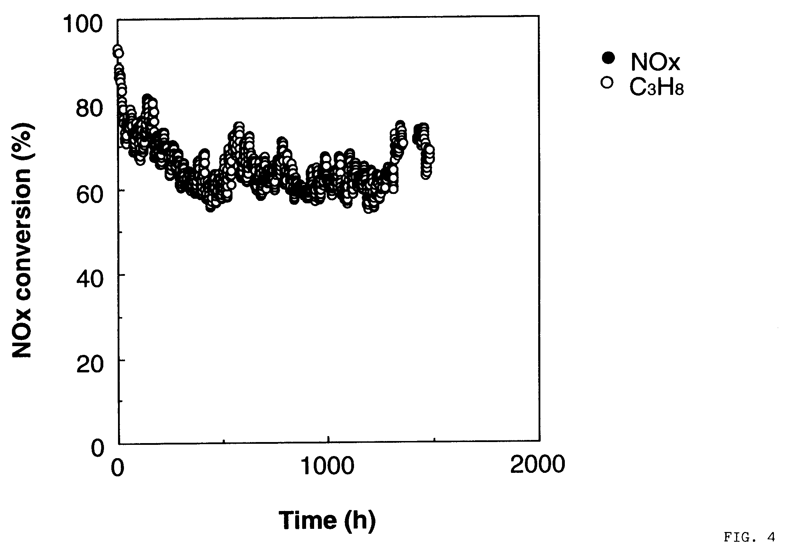

The durability of the Co-BEA (3) catalyst obtained in Example 4 was evaluated by the same method as in Example 11, except that, as test gas, the exhaust gas of the average composition specified in Table 8, discharged from a natural gas-fuled cogeneration system (air/fuel ratio = approx. 1.4), to which 1,000 ppm $C_3H_8$ was added, was allowed to flow at the rate of 10 liter/min (GHSV = 15,000) at 450°C through the reaction tube packed with 40 ml of the catalyst sample. Fig. 4 shows the result of evaluation.

TABLE 8

| NO = c.a. 500 ppm | CO = c.a. 800 ppm |
|---|---|
| THC = c.a.2200 ppm (including $CH_4$ = c.a.1600 ppm) | |
| $CO_2$ = c.a. 8.5 % | $SO_2$ = c.a. 0.4 ppm |
| $O_2$ = c.a. 6 % | $H_2O$ = c.a. 13 % |

As is clear from Fig. 4, even in actual engine exhaust gas, this catalyst showed 60% or higher NOx conversion for 1,500 hours, with slight variation due to fluctuation in the air/fuel ratio of the combustion in the engine.

According to the present invention, since the catalyst carries a metal with low activity for hydrocarbon oxidation, it provides high selectivity for NOx reduction. In addition, the catalyst of this invention uses a crystalline metallosilicate support on which metal ions can be loaded with high dispersion.

Furthermore, straight channels of large section, oriented in two or more different dimensional directions and communicating with each other, are formed in this crystalline metallosilicate support, enabling reactants to be diffused at a very high rate.

Consequently, the catalyst can effectively use metal ions (active sites) existing deep in the straigh channels, so is highly active in NOx reduction even at low temperatures. Since the NOx reduction process according to the present invention uses the above-mentioned catalyst, it effects high NOx conversion in a wide range of temperatures and even in an atmosphere unfavorable to diffusion in channels, such as an atmosphere of low NOx concentration or containing water vapor, SOx and other substances detrimental to the reaction. The B-substituted catalyst in particular is capable of selective NOx reduction by methane in the presence of water vapor.

## Claims

1. A catalyst for reducing nitrogen oxides (NOx) by hydrocarbons in an oxygenrich atmosfere, comprising: crystalline metallosilicate ion-exchanged with Co, said crystalline metallosilicate having straight channels of oxygen 8-ring or larger section oriented in at least two different dimensional directions, said straight channels communicating with each other via oxygen 8-ring or larger micropores, the straight channels in at least one of said at least two different dimensional directions having oxygen 10-ring or larger section.

2. The NOx reducing catalyst according to claim 1 wherein the crystalline metallosilicate has the average diameter of the primary particles of 0.1 to 0.2 μm.

3. The NOx reducing catalyst according to claim 1 wherein the crystalline metallosilicate is aluminosilicate.

4. The NOx reducing catalyst according to claim 3 wherein the crystalline metallosilicate is of BEA type.

5. The NOx reducing catalyst according to claim 4 wherein the crystalline metallosilicate is crystalline aluminosilicate with an $SiO_2/Al_2O_3$ ratio of 10 to 100 and with a Co/Al ratio of 0.2 to 0.6.

6. The NOx reducing catalyst according to claim 5 wherein a part of Si is substituted by Ti, and/or a part of Al is substituted by B in the crystalline metallosilicate.

7. The NOx reducing catalyst according to claim 6 wherein an $SiO_2/TiO_2$ ratio is between 20 and 200.

8. The NOx reducing catalyst according to claim 7 wherein an $SiO_2/B_2O_3$ ratio before ion exchange is between 20 and 500.

9. A process for reducing NOx in exhaust gas containing hydrocarbons and excessive amount of oxygen by hydrocarbons having two or larger number of carbons comprising: using a catalyst which contains at least crystalline metallosilicate ion-exchanged with Co, said crystalline metallosilicate having straight channels of oxygen 8-ring or larger section oriented in at least two different dimensional directions, said straight channels communicating with each other via oxygen 8-ring or larger micropores, the straight channels in at least one of said at least two different directions having oxygen 10-ring or larger section.

10. The process for reducing NOx according to claim 9 wherein the catalyst essentially consists of the crystalline metallosilicate, being BEA type aluminosilicate with an $SiO_2/Al_2O_3$ ratio of 10 to 100 and ion-exchanged with Co to have a Co/Al ratio between 0.2 and 0.6.

11. The process for reducing NOx according to claim 9 wherein the catalyst essentially consists of BEA type aluminosilicate in which a part of Si is substituted by Ti, and/or a part of Al is substituted by B, and which is ion-exchanged with Co to have a Co/Al ratio between 0.2 and 0.6.

12. The process for reducing NOx according to claim 11 wherein the catalyst essentially consists of BEA type aluminosilicate with an $SiO_2/Al_2O_3$ ratio between 10 and 100 and with an $SiO_2/TiO_2$ ratio between 20 and 200.

13. The process for reducing NOx according to any one of claim 9 to 12 wherein 90% or more of the hydroarbons calculated in terms of methane contained in the exhaust gas are hydrocarbons having four or smaller number of carbons.

14. A process for reducing NOx by hydrocarbons in exhaust gas containing excessive amount of oxygen and hydrocarbons in which 50% or more of hydrocarbons calculated in terms of methane are methane, comprising: using a catalyst which at least contains BEA type aluminosilicate with an $SiO_2/Al_2O_3$ ratio between 10 and 100 and with an $SiO_2/B_2O_3$ ratio before ion exchange between 20 and 500, and ion-exchanged with Co to have a Co/Al ratio between 0.2 and 0.6.

FIG. 1

EP 0 732 140 A1

FIG. 2

FIG. 3

EP 0 732 140 A1

FIG. 4

| | European Patent Office | EUROPEAN SEARCH REPORT | Application Number EP 96 10 3828 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 652 040 (ENIRICERCHE & OSAKA GAS) 10 May 1995 * page 3, line 11 - page 4, line 15; claims; examples * | 1-5,9, 10,13 | B01D53/86 B01D53/94 B01J29/46 |
| X | WO-A-94 01365 (MOBIL OIL CORPORATION) * claims * | 1,3,4,9 | |
| A | | 5,6, 10-14 | |
| D,X | US-A-5 149 512 (AIR PRODUCTS AND CHEMICALS) * claims 1-6; table 2 * | 1,3,4,9, 13 | |
| A | EP-A-0 541 008 (AIR PRODUCTS AND CHEMICALS) * claims * | 1,9 | |

TECHNICAL FIELDS SEARCHED (Int.Cl.6)

B01D
B01J

The present search report has been drawn up for all claims

| Place of search | Date of completion of the search | Examiner |
|---|---|---|
| THE HAGUE | 26 June 1996 | Bogaerts, M |